(19) Europäisches Patentamt
European Patent Office
Office européen des brevets

(11) **EP 4 083 969 A1**

(12) **EUROPEAN PATENT APPLICATION**
published in accordance with Art. 153(4) EPC

(43) Date of publication:
**02.11.2022 Bulletin 2022/44**

(51) International Patent Classification (IPC):
**G09B 9/00** (2006.01)     **G09B 23/28** (2006.01)

(21) Application number: **20904557.4**

(52) Cooperative Patent Classification (CPC):
**G09B 9/00; G09B 23/28**

(22) Date of filing: **22.12.2020**

(86) International application number:
**PCT/JP2020/047810**

(87) International publication number:
**WO 2021/132204 (01.07.2021 Gazette 2021/26)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **23.12.2019 JP 2019231085**

(71) Applicants:
• **Denka Company Limited**
**Tokyo 103-8338 (JP)**
• **Tohoku University**
**Sendai-shi, Miyagi 980-8577 (JP)**

(72) Inventors:
• **MATSUMOTO, Mutsumi**
**Tokyo 103-8338 (JP)**
• **MIYAMA, Akira**
**Tokyo 103-8338 (JP)**
• **KANNO, Takeshi**
**Sendai-shi, Miyagi 980-8577 (JP)**
• **ARATA, Yutaro**
**Sendai-shi, Miyagi 980-8577 (JP)**
• **MASAMUNE, Atsushi**
**Sendai-shi, Miyagi 980-8577 (JP)**

(74) Representative: **Beckmann, Claus**
**Kraus & Weisert**
**Patentanwälte PartGmbB**
**Thomas-Wimmer-Ring 15**
**80539 München (DE)**

(54) **MUCOSAL TISSUE MODEL**

(57)     [Problem] To provide a mucosal tissue model for endoscopic procedure training which can reproduce phenomena that are problems in actual resections and dissections better than conventional organ models.

[Solution] A mucosal tissue model which, by being provided with a simulated blood vessel and/or a pseudo abdominal cavity layer, reproduces hemorrhages and/or perforations that become problems in actual resections and dissections better than conventional organ models

FIG. 1

**Description**

## TECHNICAL FIELD

The present invention relates to a mucosal tissue model for endoscopic procedure training.

## BACKGROUND ART

In recent years, surgery using an endoscope is a subject of growing expectations as minimally invasive surgery which has a low burden on the human body, from which early recovery can be expected, and for which hospitalization periods can be shortened, and the number of cases thereof is increasing. For example, procedures such as endoscopic mucosal resection (EMR) and endoscopic submucosal dissection (ESD) for tumor removal or pathological examination with respect to tumors in the mucosal tissue of the digestive tract including throat organs, such as the oral cavity, the pharynx, and the larynx, and the esophagus, the stomach, and the large intestine, are becoming commonplace.

Meanwhile, advanced techniques are required for medical practices such as those described above. Organ models which can be used in procedure training to improve techniques and the quality of medical practices have hitherto been proposed (Patent Documents 1-5).

## CITATION LIST

## PATENT LITERATURE

Patent Document 1: JP 2006-116206 A

Patent Document 2: JP 2008-197483 A

Patent Document 3: JP 2018-17769 A

Patent Document 4: JP 2017-107094 A

Patent Document 5: JP 2016-38563 A

## SUMMARY OF INVENTION

## TECHNICAL PROBLEM

However, conventional organ models are insufficient at reproducing phenomena that are problems in actual resections and dissections. Thus, there is a demand for organ models which are capable of reproducing the phenomena that are problems in actual resections and dissections.

The objective of the present invention is to provide a mucosal tissue model for endoscopic procedure training which can reproduce the phenomena that are problems in actual resections and dissections better than conventional organ models.

## SOLUTION TO PROBLEM

As a result of investigating various methods, the present inventors discovered that by providing a simulated blood vessel and/or a pseudo abdominal cavity layer in a conventional mucosal tissue model, it is possible to reproduce hemorrhages and/or perforations that are problems in actual resections and dissections better than conventional organ models, and were led to the completion of the present invention.

The present invention relates to the following.

(1) A mucosal tissue model for endoscopic procedure training comprising, in order, a simulated mucosal layer and a simulated submucosal layer, wherein the mucosal tissue model has a liquid injection part provided inside either one of the simulated mucosal layer and the simulated submucosal layer, or disposed between the layers, and further has a simulated blood vessel inside a layer positioned below the simulated mucosal layer.

(2) The mucosal tissue model described in (1), wherein a simulated muscle layer is provided below the simulated submucosal layer and a simulated blood vessel is provided inside the simulated muscle layer.

(3) The mucosal tissue model described in (1) or (2), wherein the simulated blood vessel contains simulated blood at a pressure equal to or greater than atmospheric pressure.

(4) The mucosal tissue model described in any one of (1) to (3), wherein the simulated blood vessel is connected to a device that can supply simulated blood to the inside of the simulated blood vessel.

(5) A mucosal tissue model for endoscopic procedure training comprising, in order, a simulated mucosal layer and a simulated submucosal layer, wherein the mucosal tissue model has a liquid injection part provided inside either one of the simulated mucosal layer and the simulated submucosal layer, or disposed between the layers, and further has a pseudo abdominal cavity layer below the simulated submucosal layer.

(6) The mucosal tissue model described in (5), wherein the pseudo abdominal cavity layer comprises a structure body formed from a material having a lower hardness than that of the simulated submucosal layer, or comprises a space.

(7) The mucosal tissue model described in (6), wherein the material having a lower hardness than that of the simulated submucosal layer is a sponge-type material.

(8) The mucosal tissue model described in any one of (1) to (7), wherein the mucosal tissue model is capable of being incised and/or dissected by an energy device.

(9) The mucosal tissue model described in any one of (1) to (8), wherein the liquid injection part comprises a material that expands upon absorbing a liquid, the material being an absorbent polymer or a sponge-type soft resin.

(10) The mucosal tissue model described in any one of (1) to (9), wherein each layer has a type E hardness within a range from 5 to 55.

(11) The mucosal tissue model described in any one of (1) to (10), wherein at least one layer comprises a hydrous polyvinyl alcohol-based resin.

(12) The mucosal tissue model described in any one of (1) to (10), wherein at least one layer comprises a hydrocarbon resin-based resin.

(13) The mucosal tissue model described in any one of (1) to (12), wherein the mucosal tissue model is a model of an esophagus, a stomach, a duodenum, a small intestine, a large intestine, an oral cavity, a pharynx, or a larynx.

**EFFECTS OF INVENTION**

According to the present invention, it is possible to provide a mucosal tissue model for endoscopic procedure training in which phenomena that are problems in actual resections and dissections are reproduced better than in conventional models.

**BRIEF DESCRIPTION OF DRAWINGS**

FIG. 1 shows a cross section of a mucosal tissue model for endoscopic procedure training according to a first embodiment of the present invention.

FIG. 2 shows a step in ESD procedure training using the mucosal tissue model for endoscopic procedure training according to the first embodiment of the present invention.

FIG. 3 shows a step in ESD procedure training using the mucosal tissue model for endoscopic procedure training according to the first embodiment of the present invention.

FIG. 4 shows a step in ESD procedure training using the mucosal tissue model for endoscopic procedure training according to the first embodiment of the present invention.

FIG. 5 shows a step in ESD procedure training using the mucosal tissue model for endoscopic procedure training according to the first embodiment of the present invention.

FIG. 6 shows a cross section of a modification of the mucosal tissue model for endoscopic procedure training according to the first embodiment of the present invention.

FIG. 7 shows a cross section of another modification of the mucosal tissue model for endoscopic procedure training according to the first embodiment of the present invention.

FIG. 8 shows a cross section of a further modification of the mucosal tissue model for endoscopic procedure training according to the first embodiment of the present invention.

FIG. 9 shows a cross section of a mucosal tissue model for endoscopic procedure training according to a second embodiment of the present invention.

FIG. 10 shows a cross section of a modification of the mucosal tissue model for endoscopic procedure training according to the second embodiment of the present invention.

FIG. 11 shows a cross section of another modification of the mucosal tissue model for endoscopic procedure training according to the second embodiment of the present invention.

FIG. 12 shows a cross section of a further modification of the mucosal tissue model for endoscopic procedure training according to the second embodiment of the present invention.

FIG. 13 shows a cross section of a mucosal tissue model for endoscopic procedure training according to a third embodiment of the present invention.

## DESCRIPTION OF EMBODIMENTS

Embodiments of the present invention are described below with reference made to the attached drawings. The present invention is not limited to the following embodiments and can be implemented with changes added, as appropriate, as long as the effects of the invention are not inhibited.

### First Embodiment

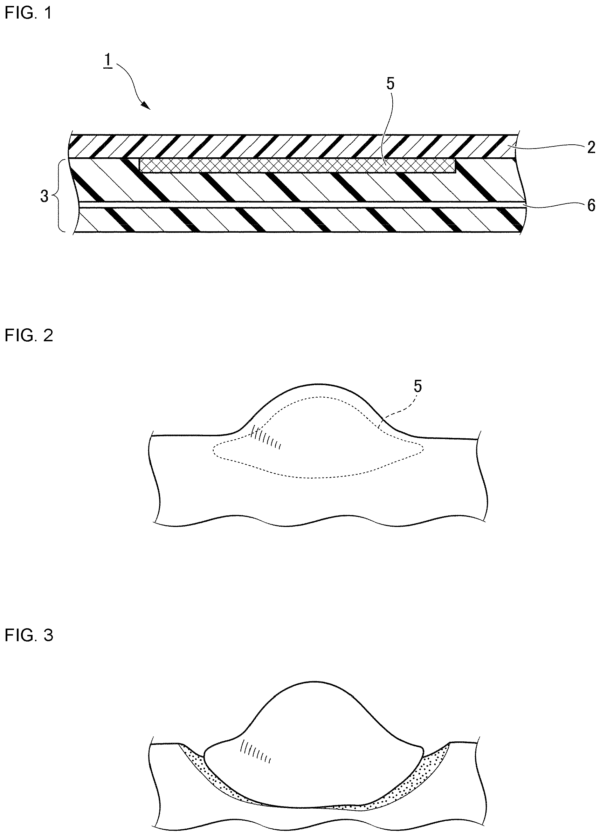

FIG. 1 shows a mucosal tissue model 1 for endoscopic procedure training according to a first embodiment of the present invention. In the present embodiment, the mucosal tissue model 1 for endoscopic procedure training comprises a simulated mucosal layer 2, a simulated submucosal layer 3, a liquid injection part 5, and a simulated blood vessel 6.

The simulated mucosal layer 2 is a tabular section that is formed from a resin, constitutes a layer on the uppermost side, and is joined at the lower surface thereof to the upper surface of the simulated submucosal layer 3.

The simulated submucosal layer 3 is a tabular section that is formed from a resin, is joined at the upper surface thereof to the lower surface of the simulated mucosal layer 2, and includes on the inside thereof the liquid injection part 5 such that the upper surface of the liquid injection part 5 is in contact with the lower surface of the simulated mucosal layer 2. The simulated submucosal layer 3 further includes, on the inside thereof, the simulated blood vessel 6.

In the mucosal tissue model 1 for endoscopic procedure training of the present embodiment, the simulated mucosal layer 2 and the simulated submucosal layer 3 may be molded from the same or different materials. The hardness of each layer should be selected, as appropriate, in accordance with the type of mucosal tissue that is assumed. However, for example, the type E hardness of a molded body could be set to a range of 5-55. More specifically, the type E hardness of the simulated mucosal layer 2 is preferably 15-45. The type E hardness of the simulated submucosal layer 3 is preferably 15-45. By setting to these hardness ranges, a value close to the hardness of the assumed tissue is achieved and it is possible for a trainee to perform a procedure with a sensation that is similar to that of an actual procedure. In the mucosal tissue model 1 for endoscopic procedure training of the present embodiment, the hardness of each layer is adjusted so that, by injecting a liquid into the liquid injection part 5, the simulated mucosal layer 2 bulges in a direction opposite to the simulated submucosal layer 3 side.

Further, when a comparison is made within the same mucosal tissue model, it is preferable that the simulated mucosal layer 2 has a higher tensile strength than the simulated submucosal layer 3. Tensile strength may be measured in accordance with JIS K 7161: 1994.

Further, each layer may be colored in accordance with the assumed mucosal tissue.

In the mucosal tissue model 1 for endoscopic procedure training of the present embodiment, as the resin for forming a layer having a type E hardness in the range described above, it is possible to use, for example, a hydrous polyvinyl alcohol-based material containing a polyvinyl alcohol and water, or a hydrocarbon-based resin material containing a lipophilic resin and an oil. The type E hardness of a molded body may be adjusted appropriately by, for example, adjusting the water content of the hydrous polyvinyl alcohol-based material, the amount of oil in the hydrocarbon-based resin material, and/or the amount of an ionic liquid.

The hydrous polyvinyl alcohol-based material may be a gel (hydrous polyvinyl alcohol gel) containing a polyvinyl alcohol cross-linked body and water, and may, for example, be a material selected from among those disclosed in JP 2011-076035 A, JP 2010-277003 A, JP 2010-197637 A, JP 2010-204131 A, JP 2011-075907 A, JP 2011-008213 A, or JP 2010-156894 A. The hydrous polyvinyl alcohol-based material may have a hardness, mechanical properties, an elasticity, a sense of touch, and a cutting sensation that resemble those of an organ.

The hydrous polyvinyl alcohol-based material (or the hydrous polyvinyl alcohol gel) may further comprise silica microparticles such as silica sol, etc. A hydrous polyvinyl alcohol-based material comprising silica microparticles may exhibit properties that resemble organ tissue extremely closely in aspects such as sense of touch, sensation when incised or when held with clips, and thermal coagulation behavior. In particular, with respect to hemostasis accompanying heating by an electric scalpel, hemostasis behavior resembling that of human tissue extremely closely is demonstrated.

The lipophilic resin constituting the hydrocarbon-based resin material may be a curable resin or a thermoplastic resin. Examples of curable resins include twocomponent soft urethane resins. Examples of thermoplastic resins include vinyl chloride resins, aromatic vinyl-conjugated diene-based block copolymers, and hydrogenated products thereof. In particular, aromatic vinyl-conjugated diene-based block copolymers and hydrogenated products thereof may be combined with an oil to form an ultra-soft molded body having a type E hardness of 55 or less.

Aromatic vinyl-conjugated diene-based block copolymers have an aromatic vinyl block unit (X) derived from an aromatic vinyl and a conjugated diene block unit (Y) derived from a conjugated diene. In aromatic vinyl-conjugated diene-based block copolymers, generally, the aromatic vinyl block unit (X), which is a hard segment, forms a pseudo cross-link (domain) for cross-linking the conjugated diene rubber block unit (Y), which is a soft segment.

Examples of aromatic vinyls that form the aromatic vinyl block unit (X) include styrene, $\alpha$-methylstyrene, 3-methylstyrene, p-methylstyrene, 4-propyl styrene, 4-dodecylstyrene, 4-cyclohexylstyrene, 2-ethyl-4-benzylstyrene, 4-(phenylbutyl)styrene, 1-vinylnaphthalene, 2-vinylnaphthalene, and combinations thereof. Among these, styrene is preferred.

Examples of conjugated dienes that form the conjugated diene block unit (Y) include butadiene, isoprene, pentadiene, 2,3-dimethyl butadiene, and combinations thereof. Among these, butadiene, isoprene, and a combination of butadiene and isoprene (a butadiene-isoprene copolymer) are preferred. The butadiene-isoprene copolymer may be any of a random copolymerization unit, a block copolymerization unit, or a tapered copolymerization unit comprising butadiene and isoprene.

Forms of aromatic vinyl-conjugated diene block copolymers are represented by, for example, $X(YX)_n$ or $(XY)_n$ (where n is an integer of 1 or more). Among these, copolymers with the form $X(YX)_n$, and in particular, copolymers with the form X-Y-X, are preferred. Examples of copolymers with the form X-Y-X include polystyrenepolybutadiene-polystyrene block copolymers, polystyrene-polyisoprene-polystyrene block copolymers, and polystyrene-polyisoprene/butadiene-polystyrene block copolymers. The soft resin constituting a model main body section may be one or more soft resins selected from the group consisting of aromatic vinyl-conjugated diene-based block copolymers.

The content of the aromatic vinyl block unit (X) in the aromatic vinyl-conjugated diene block copolymer is preferably 5 mass% or more and 50 mass% or less, and more preferably 20 mass% or more and 40 mass% or less, relative to the total mass of the aromatic vinyl-conjugated diene block copolymer. The content of the aromatic vinyl block unit (X) may be measured by a normal method such as infrared spectroscopy, NMR spectroscopy, etc.

Aromatic vinyl-conjugated diene block copolymers such as those described above can be produced by various methods. Examples of production methods include (1) a method of sequentially polymerizing an aromatic vinyl and then a conjugated diene using an alkyl lithium compound such as n-butyllithium as an initiator, (2) a method of polymerizing an aromatic vinyl and then a conjugated diene, and coupling the same using a coupling agent, and (3) a method of sequentially polymerizing a conjugated diene and then an aromatic vinyl using a lithium compound as an initiator.

A hydrogenated product of an aromatic vinyl-conjugated diene-based block copolymer is a copolymer generated by hydrogenating an aromatic vinyl-conjugated diene block copolymer, such as those described above, by a publicly known method. The hydrogenation rate is preferably 90 mol% or more. The hydrogenation rate may be measured by a publicly known method such as nuclear magnetic resonance (NMR) spectroscopy, etc.

Examples of a hydrogenated product of an aromatic vinyl-conjugated diene-based block copolymer include a polystyrene-poly(ethylene/propylene) block copolymer (SEP), a polystyrene-poly(ethylene/propylene) block-polystyrene copolymer (SEPS), a polystyrene-poly(ethylene/butylene) block-polystyrene copolymer (SEBS), and a polystyrene-poly(ethylene-ethylene/propylene) block-polystyrene copolymer (SEEPS). Example of commercial products which are hydrogenated products of an aromatic vinyl-conjugated diene-based block copolymer include SEPTON (manufactured by Kuraray Co. Ltd.), Kraton (manufactured by Shell Chemicals), Kraton G (manufactured by Shell Chemicals), and Tuftec (manufactured by Asahi Kasei Corp.), etc. (the above are product names). SEEPS is preferable as the hydrogenated product of the aromatic vinyl-conjugated diene-based block copolymer.

The melt flow rate (MFR (temperature 230°C, load 2.16 kg)) of the aromatic vinyl-conjugated diene-based block copolymer and the hydrogenated product thereof is preferably 1 g/10 min. or less and more preferably less than 0.1 g/10 min. MFR (temperature 230°C, load 2.16 kg) is measured in compliance with JIS K 7210 under conditions of a temperature of 230°C at a load of 2.16 kg. The MFR being within the ranges described above is advantageous in terms of suppressing oil bleed-out and providing appropriate mechanical strength.

From the perspective of oil absorption work before kneading, it is preferable that the form of the aromatic vinyl-conjugated diene-based block copolymer and the hydrogenated product thereof is a powder or an amorphous (crumb) form.

The oil constituting the hydrocarbon-based resin material together with the lipophilic resin described above renders the hydrocarbon-based resin material soft and is used to adjust the elastic modulus and hardness thereof to a range appropriate for an ulcer model. Examples of this oil include mineral oils such as paraffin-based process oils, naphthene-based process oils, aromatic process oils, and liquid paraffin, silicone silicon oils, castor oil, linseed oil, olefine-based waxes, and mineral waxes, etc. Among these, paraffin-based process oils and naphthene-based process oils are preferred. Examples of commercial products which are process oils include the Diana Process Oil series (manufactured by Idemitsu Kosan Co., Ltd.) and JOMO Process P (manufactured by Japan Energy Corporation), etc. It is also possible to use more than one of the oils described above in combination.

From the aspect of workability, it is preferable to absorb the oil in lipophilic resin pellets or crumbs.

The amount of the oil is adjusted in accordance with the site of the assumed organ and the type of ulcer, etc. For example, with respect to 100 parts by mass of the lipophilic resin (for example, an aromatic vinyl-conjugated diene-based block copolymer), the amount of the oil may be 100 parts by mass or more and may be 2,000 parts by mass or less, or 1,600 parts by mass or less. If the amount of oil is small, softness may be insufficient, and if the amount of oil is excessively large, it may be difficult to mix with a lipophilic resin, and oil seepage (bleed-out) may occur.

In order to suppress oil seepage or in order to adjust mechanical properties, the hydrocarbon-based resin material may include, for example, a polyolefinic crystalline resin, preferably a polyethylenic crystalline resin, and may include an inorganic filler such as calcium carbonate, etc., or an organic or inorganic fibrous filler.

A molded body of a hydrous polyvinyl alcohol-based material may be formed, for example, by a method in which a molding composition containing a polyvinyl alcohol, a cross-linking agent (boric acid, etc.), and water is poured into a mold and then gelated, or a method in which the same molding composition is poured into a mold and gelation is promoted by repeatedly freezing the molding composition by cooling to the melting point thereof or lower and melting the molding composition by heating to the melting point thereof or higher. A molded body of a hydrocarbon-based resin material may be formed, for example, by a molding method such as casting, vacuum molding, or injection molding including multiple colors.

An ionic liquid may be used as a material of the simulated mucosal layer 2 and the simulated submucosal layer 3, and electrical conductivity may be imparted thereby. The ionic liquid is not particularly limited, and examples thereof include ionic liquids configured from cations and anions. The ionic liquid in one embodiment of the present invention is free of solvents such as water and ethylene glycol.

Examples of the cations include amidinium cations, pyridinium cations, pyrazolium cations, and guanidinium cations, etc.

Examples of amidinium cations include 1,2,3,4-tetramethylimidazolinium cation, 1,3,4-trimethyl-2-ethylimidazolinium cation, 1,3-dimethylimidazolinium cation, 1,3-dimethyl-2,4-diethylimidazolinium cation, 1,2-dimethyl-3,4-diethylimidazolinium cation, 1-methyl-2,3,4-triethylimidazolinium cation, 1,2,3,4-tetraethylimidazolinium cation, 1,2,3-trimethylimidazolinium cation, 1,3-dimethyl-2-ethylimidazolinium cation, 1-ethyl-2,3-dimethylimidazolinium cation, 1,2,3-triethylimidazolinium cation, 4-cyano-1,2,3-trimethylimidazolinium cation, 3-cyanomethyl-1,2-dimethylimidazolinium cation, 2-cyanomethyl-1,3-dimethylimidazolinium cation, 4-acetyl-1,2,3-trimethylimidazolinium cation, 3-acetylmethyl-1,2-dimethylimidazolinium cation, 4-methylcarboxymethyl-1,2,3-trimethylimidazolinium cation, 3-methylcarboxymethyl-1,2-dimethylimidazolinium cation, 4-methoxy-1,2,3-trimethylimidazolinium cation, 3-methoxymethyl-1,2-dimethylimidazolinium cation, 4-formyl-1,2,3-trimethylimidazolinium cation, 3-formylmethyl-1,2-dimethylimidazolinium cation, 3-hydroxyethyl-1,2-dimethylimidazolinium cation, 4-hydroxymethyl-1,2,3-trimethylimidazolinium cation, and 2-hydroxyethyl-1,3-dimethylimidazolinium cation.

Examples of imidazolium cations include 1,3-dimethylimidazolium cation, 1,3-diethylimidazolium cation, 1-ethyl-3-methylimidazolium cation, 1,2,3-trimethylimidazolium cation, 1,2,3,4-tetramethylimidazolium cation, 1,3-dimethyl-2-ethylimidazolium cation, 1,2-dimethyl-3-ethyl-imidazolium cation, 1,2,3-triethylimidazolium cation, 1,2,3,4-tetraethylimidazolium cation, 1,3-dimethyl-2-phenylimidazolium cation, 1,3-dimethyl-2-benzylimidazolium cation, 1-benzyl-2,3-dimethyl-imidazolium cation, 4-cyano-1,2,3-trimethylimidazolium cation, 3-cyanomethyl-1,2-dimethylimidazolium cation, 2-cyanomethyl-1,3-dimethylimidazolium cation, 4-acetyl-1,2,3-trimethylimidazolium cation, 3-acetylmethyl-1,2-dimethyl-imidazolium cation, 4-methylcarboxymethyl-1,2,3-trimethylimidazolium cation, 3-methylcarboxymethyl-1,2-dimethyl-imidazolium cation, 4-methoxy-1,2,3-trimethylimidazolium cation, 3-methoxymethyl-1,2-dimethylimidazolium cation, 4-formyl-1,2,3-trimethylimidazolium cation, 3-formylmethyl-1,2-dimethylimidazolium cation, 3-hydroxyethyl-1,2-dimethyl-imidazolium cation, 4-hydroxymethyl-1,2,3-trimethylimidazolium cation, and 2-hydroxyethyl-1,3-dimethylimidazolium cation.

Examples of tetrahydropyrimidinium cations include 1,3-dimethyl-1,4,5,6-tetrahydropyrimidinium cation, 1,2,3-trimethyl-1,4,5,6-tetrahydropyrimidinium cation, 1,2,3,4-tetramethyl-1,4,5,6-tetrahydropyrimidinium cation, 1,2,3,5-tetramethyl-1,4,5,6-tetrahydropyrimidinium cation, 8-methyl-1,8-diazabicyclo[5,4,0]-7-undecenium cation, 5-methyl-1,5-diazabicyclo[4,3,0]-5-nonenium cation, 4-cyano-1,2,3-trimethyl-1,4,5,6-tetrahydropyrimidinium cation, 3-cyanomethyl-1,2-dimethyl-1,4,5,6-tetrahydropyrimidinium cation, 2-cyanomethyl-1,3-dimethyl-1,4,5,6-tetrahydropyrimidinium cation, 4-acetyl-1,2,3-trimethyl-1,4,5,6-tetrahydropyrimidinium cation, 3-acetylmethyl-1,2-dimethyl-1,4,5,6-tetrahydropyrimidinium cation, 4-methylcarboxymethyl-1,2,3-trimethyl-1,4,5,6-tetrahydropyrimidinium cation, 3-methylcarboxymethyl-1,2-dimethyl-1,4,5,6-tetrahydropyrimidinium cation, 4-methoxy-1,2,3-trimethyl-1,4,5,6-tetrahydropyrimidinium cation, 3-methoxymethyl-1,2-dimethyl-1,4,5,6-tetrahydropyrimidinium cation, 4-formyl-1,2,3-trimethyl-1,4,5,6-tetrahydropyrimidinium cation, 3-formylmethyl-1,2-dimethyl-1,4,5,6-tetrahydropyrimidinium cation, 3-hydroxyethyl-1,2-dimethyl-1,4,5,6-tetrahydropyrimidinium cation, 4-hydroxymethyl-1,2,3-trimethyl-1,4,5,6-tetrahydropyrimidinium cation, and 2-hydroxyethyl-1,3-dimethyl-1,4,5,6-tetrahydropyrimidinium cation.

Examples of dihydropyrimidinium cations include 1,2,3-trimethyl-1,4-dihydropyrimidinium cation, 1,2,3,4-tetramethyl-1,4-dihydropyrimidinium cation, 1,2,3,5-tetramethyl-1,6-dihydropyrimidinium cation, 8-methyl-1,8-diazabicyclo[5,4,0]-7,9-undecadienium cation, 5-methyl-1,5-diazabicyclo[4,3,0]-5,7-nonadienium cation, 4-cyano-1,2,3-trimethyl-1,6-dihydropyrimidinium cation, 3-cyanomethyl-1,2-dimethyl-1,4-dihydropyrimidinium cation, 2-cyanomethyl-1,3-dimethyl-1,4-dihydropyrimidinium cation, 4-acetyl-1,2,3-trimethyl-1,6-dihydropyrimidinium cation, 3-acetylmethyl-1,2-dimethyl-1,4-dihydropyrimidinium cation, 4-methylcarboxymethyl-1,2,3-trimethyl-1,4-dihydropyrimidinium cation, 3-methylcarboxymethyl-1,2-dimethyl-1,4-dihydropyrimidinium cation, 4-methoxy-1,2,3-trimethyl-1,6-dihydropyrimidinium cation, 3-methoxymethyl-1,2-dimethyl-1,4-dihydropyrimidinium cation, 4-formyl-1,2,3-trimethyl-1,6-dihydropyrimidinium cation, 3-formylmethyl-1,2-dimethyl-1,6-dihydropyrimidinium cation, 3-hydroxyethyl-1,2-dimethyl-1,6-dihydropyrimidinium cation, 4-hydroxymethyl-1,2,3-trimethyl-1,4-dihydropyrimidinium cation, and 2-hydroxyethyl-1,3-dimethyl-1,4-hydropyrimidinium cation.

Examples of pyridinium cations include 3-methyl-1-propylpyridinium cation, 1-propyl-3-methylpyridinium cation, 1-butyl-3-methylpyridinium cation, 1-butyl-4-methylpyridinium cation, 1-butyl-3,4-dimethylpyridinium cation, and 1-butyl-3,5-dimethylpyridinium cation.

Examples of pyrazolium cations include 1,2-dimethylpyrazolium cation, 1-methyl-2-propylpyrazolium cation, 1-n-butyl-2-methylpyrazolium cation, and 1-n-butyl-2-ethylpyrazolium cation.

Examples of guanidinium cations include guanidinium cations with an imidazolinium backbone, guanidinium cations with an imidazolium backbone, guanidinium cations with a tetrahydropyrimidinium backbone, and guanidinium cations with a dihydropyrimidinium backbone.

Examples of guanidinium cations with an imidazolinium backbone include 2-dimethylamino-1,3,4-trimethylimidazolinium cation, 2-diethylamino-1,3,4-trimethylimidazolinium cation, 2-diethylamino-1,3-dimethyl-4-ethylimidazolinium cation, 2-dimethylamino-1-methyl-3,4-diethylimidazolinium cation, 2-diethylamino-1-methyl-3,4-diethylimidazolinium cation, 2-diethylamino-1,3,4-tetraethylimidazolinium cation, 2-dimethylamino-1,3-dimethylimidazolinium cation, 2-diethylamino-1,3-dimethylimidazolinium cation, 2-dimethylamino-1-ethyl-3-methylimidazolinium cation, 2-diethylamino-1,3-diethylimidazolinium cation, 1,5,6,7-tetrahydro-1,2-dimethyl-2H-imido[1,2a]imidazolinium cation, 1,5-dihydro-1,2-dimethyl-2H-imido[1,2a]imidazolinium cation, 1,5,6,7-tetrahydro-1,2-dimethyl-2H-pyrimido[1,2a]imidazolinium cation, 1,5-dihydro-1,2-dimethyl-2H-pyrimido[1,2a]imidazolinium cation, 2-dimethylamino-4-cyano-1,3-dimethylimidazolinium cation, 2-dimethylamino-3-cyanomethyl-1-methylimidazolinium cation, 2-dimethylamino-4-acetyl-1,3-dimethylimidazolinium cation, 2-dimethylamino-3-acetylmethyl-1-methylimidazolinium cation, 2-dimethylamino-4-methylcarboxymethyl-1,3-dimethylimidazolinium cation, 2-dimethylamino-3-methylcarboxymethyl-1-methylimidazolinium cation, 2-dimethylamino-4-methoxy-1,3-dimethylimidazolinium cation, 2-dimethylamino-3-methoxymethyl-1-methylimidazolinium cation, 2-dimethylamino-4-formyl-1,3-dimethylimidazolinium cation, 2-dimethylamino-3-formylmethyl-1-methylimidazolinium cation, 2-dimethylamino-3-hydroxyethyl-1-methylimidazolinium cation, and 2-dimethylamino-4-hydroxymethyl-1,3-dimethylimidazolinium cation.

Examples of guanidinium cations with an imidazolium backbone include 2-dimethylamino-1,3,4-trimethylimidazolium cation, 2-diethylamino-1,3,4-trimethylimidazolium cation, 2-diethylamino-1,3-dimethyl-4-ethylimidazolium cation, 2-dimethylamino-1-methyl-3,4-diethylimidazolium cation, 2-diethylamino-1-methyl-3,4-diethylimidazolium cation, 2-diethylamino-1,3,4-tetraethylimidazolium cation, 2-dimethylamino-1,3-dimethylimidazolium cation, 2-diethylamino-1,3-dimethylimidazolium cation, 2-dimethylamino-1-ethyl-3-methylimidazolium cation, 2-diethylamino-1,3-diethylimidazolium cation, 1,5,6,7-tetrahydro-1,2-dimethyl-2H-imido[1,2a]imidazolium cation, 1,5-dihydro-1,2-dimethyl-2H-imido[1,2a]imidazolium cation, 1,5,6,7-tetrahydro-1,2-dimethyl-2H-pyrimido[1,2a]imidazolium cation, 1,5-dihydro-1,2-dimethyl-2H-pyrimido[1,2a]imidazolium cation, 2-dimethylamino-4-cyano-1,3-dimethylimidazolium cation, 2-dimethylamino-3-cyanomethyl-1-methylimidazolium cation, 2-dimethylamino-4-acetyl-1,3-dimethylimidazolinium cation, 2-dimethylamino-3-acetylmethyl-1-methylimidazolium cation, 2-dimethylamino-4-methylcarboxymethyl-1,3-dimethylimidazolium cation, 2-dimethylamino-3-methylcarboxymethyl-1-methylimidazolium cation, 2-dimethylamino-4-methoxy-1,3-dimethylimidazolium cation, 2-dimethylamino-3-methoxymethyl-1-methylimidazolium cation, 2-dimethylamino-4-formyl-1,3-dimethylimidazolium cation, 2-dimethylamino-3-formylmethyl-1-methylimidazolium cation, 2-dimethylamino-3-hydroxyethyl-1-methylimidazolium cation, and 2-dimethylamino-4-hydroxymethyl-1,3-dimethylimidazolium cation.

Examples of guanidinium cations with a tetrahydropyrimidinium backbone include 2-dimethylamino-1,3,4-trimethyl-1,4,5,6-tetrahydropyrimidinium cation, 2-diethylamino-1,3,4-trimethyl-1,4,5,6-tetrahydropyrimidinium cation, 2-diethylamino-1,3-dimethyl-4-ethyl-1,4,5,6-tetrahydropyrimidinium cation, 2-dimethylamino-1-methyl-3,4-diethyl-1,4,5,6-tetrahydropyrimidinium cation, 2-diethylamino-1-methyl-3,4-diethyl-1,4,5,6-tetrahydropyrimidinium cation, 2-diethylamino-1,3,4-tetraethyl-1,4,5,6-tetrahydropyrimidinium cation, 2-dimethylamino-1,3-dimethyl-1,4,5,6-tetrahydropyrimidinium cation, 2-diethylamino-1,3-dimethyl-1,4,5,6-tetrahydropyrimidinium cation, 2-dimethylamino-1-ethyl-3-methyl-1,4,5,6-tetrahydropyrimidinium cation, 2-diethylamino-1,3-diethyl-1,4,5,6-tetrahydropyrimidinium cation, 1,3,4,6,7,8-hexahydro-1,2-dimethyl-2H-imido[1,2a]pyrimidinium cation, 1,3,4,6-tetrahydro-1,2-dimethyl-2H-imido[1,2a]pyrimidinium cation, 1,3,4,6,7,8-hexahydro-1,2-dimethyl-2H-pyrimido[1,2a]pyrimidinium cation, 1,3,4,6-tetrahydro-1,2-dimethyl-2H-pyrimido[1,2a]pyrimidinium cation, 2-dimethylamino-4-cyano-1,3-dimethyl-1,4,5,6-tetrahydropyrimidinium cation, 2-dimethylamino-3-cyanomethyl-1-methyl-1,4,5,6-tetrahydropyrimidinium cation, 2-dimethylamino-4-acetyl-1,3-dimethyl-1,4,5,6-tetrahydropyrimidinium cation, 2-dimethylamino-3-acetylmethyl-1-methyl-1,4,5,6-tetrahydropyrimidinium cation, 2-dimethylamino-4-methylcarboxymethyl-1,3-dimethyl-1,4,5,6-tetrahydropyrimidinium cation, 2-dimethylamino-3-methylcarboxymethyl-1-methyl-1,4,5,6-tetrahydropyrimidinium cation, 2-dimethylamino-4-methoxy-1,3-dimethyl-1,4,5,6-tetrahydropyrimidinium cation, 2-dimethylamino-3-methoxymethyl-1-methyl-1,4,5,6-tetrahydropyrimidinium cation, 2-dimethylamino-4-formyl-1,3-dimethyl-1,4,5,6-tetrahydropyrimidinium cation, 2-dimethylamino-3-formylmethyl-1-methyl-1,4,5,6-tetrahydropyrimidinium cation, 2-dimethylamino-3-hydroxyethyl-1-methyl-1,4,5,6-tetrahydropyrimidinium cation, and 2-dimethylamino-4-hydroxymethyl-1,3-dimethyl-1,4,5,6-tetrahydropyrimidinium cation.

Examples of guanidinium cations with a dihydropyrimidinium backbone include 2-dimethylamino-1,3,4-trimethyl-1,4-dihydropyrimidinium cation, 2-diethylamino-1,3,4-trimethyl-1,6-dihydropyrimidinium cation, 2-diethylamino-1,3-dimethyl-4-ethyl-1,6-dihydropyrimidinium cation, 2-dimethylamino-1-methyl-3,4-diethyl-1,4-dihydropyrimidinium cation, 2-diethylamino-1-methyl-3,4-diethyl-1,4-dihydropyrimidinium cation, 2-diethylamino-1,3,4-tetraethyl-1,6-dihydropyrimidinium cation, 2-dimethylamino-1,3-dimethyl-1,4-dihydropyrimidinium cation, 2-diethylamino-1,3-dimethyl-1,4-dihydropyrimidinium cation, 2-dimethylamino-1-ethyl-3-methyl-1,4-dihydropyrimidinium cation, 2-diethylamino-1,3-diethyl-1,6-dihydropyrimidinium cation, 1,6,7,8-tetrahydro-1,2-dimethyl-2H-imido[1,2a]pyrimidinium cation, 1,6-dihydro-1,2-dimethyl-2H-imido[1,2a]pyrimidinium cation, 1,6,7,8-tetrahydro-1,2-dimethyl-2H-pyrimido[1,2a]pyrimidinium cation, 1,6-dihydro-1,2-dimethyl-2H-pyrimido[1,2a]pyrimidinium cation, 2-dimethylamino-4-cyano-1,3-dimethyl-1,4-dihydropyrimidinium cation, 2-dimethylamino-3-cyanomethyl-1-methyl-1,6-dihydropyrimidinium cation, 2-dimethylamino-4-acetyl-1,3-dimethyl-1,4-dihydropyrimidinium cation, 2-dimethylamino-3-acetylmethyl-1-methyl-1,4-dihydropyrimidinium cation, 2-dimethylamino-4-methylcarboxymethyl-1,3-dimethyl-1,4-dihydropyrimidinium cation, 2-dimethylamino-3-methylcarboxymethyl-1-methyl-1,4-dihydropyrimidinium cation, 2-dimethylamino-4-methoxy-1,3-dimethyl-1,6-dihydropyrimidinium cation, 2-dimethylamino-3-methoxymethyl-1-methyl-1,4-dihydropyrimidinium cation, 2-dimethylamino-4-formyl-1,3-dimethyl-1,4,5,6-tetrahydropyrimidinium cation, 2-dimethylamino-3-formylmethyl-1-methyl-1,4,5,6-tetrahydropyrimidinium cation, 2-dimethylamino-3-hydroxyethyl-1-methyl-1,4,5,6-tetrahydropyrimidinium cation, and 2-dimethylamino-4-hydroxymethyl-1,3-dimethyl-1,4-dihydropyrimidinium cation.

Anions with a proton removed from the acids shown below are provided as examples of the anions. A mixture of two or more anions may be used.

As the anion, a carboxylic acid can be used, and specific examples thereof include monocarboxylic acids {aliphatic monocarboxylic acids with 1-30 carbon atoms [saturated monocarboxylic acids (such as formic acid, acetic acid, propionic acid, butyric acid, isobutyric acid, valeric acid, caproic acid, enanthic acid, caprylic acid, pelargonic acid, lauric acid, myristic acid, stearic acid, and behenic acid), fluorine atom-containing carboxylic acids (such as trifluoroacetic acid), and unsaturated monocarboxylic acids (such as acrylic acid, methacrylic acid, and oleic acid)] and aromatic monocarboxylic acids (such as benzoic acid, cinnamic acid, and naphthoic acid)}, polycarboxylic acids (di- to tetra-valent polycarboxylic acids) {aliphatic polycarboxylic acids [saturated polycarboxylic acids (such as oxalic acid, malonic acid, succinic acid, glutaric acid, adipic acid, pimelic acid, suberic acid, azelaic acid, and sebacic acid); unsaturated polycarboxylic acids (such as maleic acid, fumaric acid, and itaconic acid)]; aromatic polycarboxylic acids [such as phthalic acid, isophthalic acid, terephthalic acid, trimellitic acid, and pyromellitic acid]; aliphatic oxycarboxylic acids [such as glycolic acid, lactic acid, and tartaric acid]; aromatic oxycarboxylic acids [such as salicylic acid and mandelic acid]; sulfur atom-containing polycarboxylic acids [such as thiodipropionic acid]; other polycarboxylic acids [cyclobutene-1,2-dicarboxylic acid, cyclopentene-1,2-dicarboxylic acid, furan-2,3-dicarboxylic acid, bicyclo[2,2,1]hepta-2-ene-2,3-dicarboxylic acid, and bicyclo[2,2,1]hepta-2,5-diene-2,3-dicarboxylic acid]; etc.}.

As the anion, a sulfonic acid may be used, and specific examples thereof include alkanesulfonic acids with 1-30 carbon atoms (such as methanesulfonic acid, ethanesulfonic acid, butanesulfonic acid, octanesulfonic acid, and dodecanesulfonic acid); alkylbenzenesulfonic acids with 7-30 carbon atoms (such as octylbenzenesulfonic acid and dodecylbenzenesulfonic acid).

As the anion, an inorganic acid can be used, and specific examples thereof include hydrofluoric acid, hydrochloric acid, sulfuric acid, phosphoric acid, $HClO_4$, $HBF_4$, $HPF_6$, $HAsF_6$, and $HSbF_6$.

As the anion, a halogen atom-containing alkyl group substituted inorganic acid (the alkyl group having 1-30 carbon atoms) can be used, and specific examples thereof include $HBF_n(CF_3)_{4-n}$ (n being an integer of 0-3), $HPF_n(CF_3)_{6-n}$ (n being an integer of 0-5), trifluoromethanesulfonic acid, pentafluoroethanesulfonic acid, heptafluoropropanesulfonic acid, trichloromethanesulfonic acid, pentachloropropanesulfonic acid, heptachlorobutanesulfonic acid, tris(pentafluoroethyl)trifluorophosphate, trifluoroacetic acid, pentafluoropropionic acid, pentafluorobutanoic acid, trichloroacetic acid, pentachloropropionic acid, and heptachlorobutanoic acid.

As the anion, a halogen atom-containing sulfonylimide (having 1-30 carbon atoms) can be used, and specific examples thereof include bis(fluoromethylsulfonyl)imide, bis(trifluoromethanesulfonyl)imide, and bis(fluorosulfonyl)imide.

As the anion, a halogen atom-containing sulfonylmethide (having 3-30 carbon atoms) can be used, and specific examples thereof include tris(trifluoromethylsulfonyl)methide.

As the anion, a halogen atom-containing carboxylic acid amide (having 2-30 carbon atoms) can be used, and specific examples thereof include bis(trifluoroaceto)amide.

As the anion, a nitrile group-containing imide can be used, and specific examples thereof include $HN(CN)_2$.

As the anion, a nitrile-containing methide can be used, and specific examples thereof include $HC(CN)_3$.

As the anion, a halogen atom-containing alkylamine with 1-30 carbon atoms can be used, and specific examples thereof include $HN(CF_3)_2$.

As the anion, a cyanic acid can be used, and specific examples thereof include thiocyanic acid.

Moreover, commercially available ionic liquids can also be used. Examples of commercially available ionic liquids include CIL312 (N-butyl-3-methylpyridinium/bistrifluoromethanesulfonylimide, manufactured by Japan Carlit Co., Ltd.), Aminoion AS100 (manufactured by Nippon Nyukazai Co., Ltd.), Aminoion AS300 (manufactured by Nippon Nyukazai Co., Ltd.), FC-4400 (tri-n-butylmethylammonium bistrifluoromethanesulfonimide, manufactured by 3M), and Hishicolin (dodecyltributylphosphonium chloride, manufactured by Nippon Chemical Industrial Co., Ltd.).

The solubility parameter (hereinafter abbreviated as SP value) of the ionic liquid is preferably 8.0-12.0 $(cal/cm^3)^{1/2}$, more preferably 8.5-11.5 $(cal/cm^3)^{1/2}$, and particularly preferably 9.0-10.8 $(cal/cm^3)^{1/2}$.

Note that the SP value of the ionic liquid is a numerical value determined by the following method.

To a suspension obtained by mixing 50 g of methyl methacrylate and 50 g of an ionic liquid, 2-hydroxyethyl methacrylate was added dropwise, and when the suspension was visually confirmed as having turned transparent, the drip amount (g) of the 2-hydroxyethyl methacrylate was used to calculate an SP value of the ionic liquid with the following equation.

$$\text{SP value of ionic liquid} = (9.9P + 13.5Q)/100$$

9.9: SP value of methyl methacrylate

P: Weight ratio (weight%) of methyl methacrylate based on total weight of methyl methacrylate and 2-hydroxyethyl methacrylate

13.5: SP value of 2-hydroxyethyl methacrylate

Q: Weight ratio (weight%) of 2-hydroxyethyl methacrylate based on total weight of methyl methacrylate and 2-hydroxyethyl methacrylate

The method for synthesizing the ionic liquid is not particularly limited as long as the target ionic liquid can be obtained, and examples thereof include a halide method, a hydroxide method, an acid ester method, a complexation method, and a neutralization method, which are described in "Ionic Liquids: The Front and Future of Material Development" (Hiroyuki Ohno, 2003, CMC Publishing Co., Ltd.).

The content of the ionic liquid is preferably 50-250 parts by mass, more preferably 50-240 parts by mass, and still more preferably 70-210 parts by mass, with respect to 100 parts by mass of the resin component that is the raw material. Setting the content of the ionic liquid to 50 parts by mass or more with respect to 100 parts by mass of the resin component can contribute to the suppression of an increase in volume resistivity and to the impartation of softness, and by setting the content to 250 parts by mass or less, bleed-out of the ionic liquid from the material can be suppressed.

The resin for forming the simulated mucosal layer 2 and the simulated submucosal layer 3 can have blended therein and use, as necessary, an elastomer, rubber, a plasticizer, a filler or stabilizer, an anti-aging agent, a light resistance improver, an ultraviolet absorber, a softener, a glidant, a processing aid, a colorant, an antifogging agent, an anti-blocking agent, a crystal nucleating agent, and a foaming agent, etc.

In the present embodiment, the liquid injection part 5 is a tabular structure body containing a material that expands upon absorbing a liquid. In another embodiment, the liquid injection part 5 is a region having a space charged with a granular-type material that expands upon absorbing a liquid. The shape of the liquid injection part 5 when viewed from a side opposing the upper surface may be substantially circular or substantially rectangular.

The material that expands upon absorbing a liquid is not particularly limited and it is possible to use an absorbent polymer, a sponge-type soft resin, a non-woven fabric, cellulose, or a hydrous polyvinyl alcohol-based material, etc. The liquid that is injected into the liquid injection part is not particularly limited and examples thereof include water, physiological saline, and hyaluronic acid, etc.

Further, as long as the simulated mucosal layer 2 is not inhibited from bulging in the direction on the opposite side to the simulated submucosal layer 3, the dimensions of the liquid injection part 5 are not particularly limited, and the thickness thereof may be, for example, 0.3-1.5 mm and the diameter thereof, when viewed from the side opposing the upper surface, may be ø20-ø50 mm. Further, a protuberance height upwards from the thickness direction of the liquid injection part 5 after the liquid is injected is not particularly limited, but is preferably 10-20 mm.

In the present embodiment, the simulated blood vessel 6 is a tube that is provided separately from the simulated submucosal layer 3 and is embedded in the simulated submucosal layer 3. By being a tube, a tubular structure is easily maintained even when a layer that includes the tube is soft. As the material of the tube, a soft material is preferable, and the material may be, for example, an elastomer tube having a type A hardness of 70 or less. Specific examples thereof include tubes comprising an ethylene-vinyl acetate copolymer, an ionomer, polytetrafluoroethylene, polyvinyl chloride, polyurethane, silicone, a polyolefin-based elastomer, or a polystyrenebased elastomer. The inner diameter of the simulated blood vessel 6 is not particularly limited by the type of blood vessel that is assumed, but is preferably 0.1 mm-2.5 mm, more preferably 0.3 mm-1.5 mm, and still more preferably 0.5 mm-1 mm. The outer diameter of the tube is set, as appropriate, in accordance with the size of the inner diameter and is not particularly limited, but is preferably 0.3 mm-3 mm, more preferably 0.3 mm-2 mm, and still more preferably 0.5 mm-1 mm.

There may be a plurality of simulated blood vessels 6 inside the simulated submucosal layer 3. For example, there may be one to five simulated blood vessels. Further, the shape of the simulated blood vessel 6 may be a tubular structure with no branches, may have a plurality of branches, and may be reticular. The simulated blood vessel 6 may contain therein simulated blood at a pressure equal to or greater than atmospheric pressure. In that case, when a tube of the simulated blood vessel 6 is damaged, the simulated blood flows from the inside of the simulated blood vessel 6 to the outside.

Examples of mucosal tissue assumed for the mucosal tissue model 1 for endoscopic procedure training include the esophagus, the stomach, the duodenum, the small intestine, the large intestine, the oral cavity, the pharynx, and the larynx, etc.

The maximum width of the mucosal tissue model 1 for endoscopic procedure training in a direction orthogonal to the thickness direction of the mucosal tissue model 1 for endoscopic procedure training should be within a range corresponding to the size of general tumors treated by EMR or ESD, and may be configured so as to be, for example, 2 cm or more and 3 cm or less.

Further, the shape of the mucosal tissue model 1 for endoscopic procedure training when viewed from a side opposing the upper surface thereof is not particularly limited and may be substantially circular or substantially polygonal.

The thickness of the mucosal tissue model 1 for endoscopic procedure training may be selected, as appropriate, in accordance with the mucosal tissue that is assumed, but a range of 3-12 mm, and in particular 5-7 mm, is preferable. A range of 0.3-2.0 mm, and in particular 0.5-1.0 mm, is preferable for the thickness of the simulated mucosal layer 2. A range of 1.0-5.0 mm, and in particular 2.0-3.0 mm, is preferable for the thickness of the simulated submucosal layer 3. By setting to these thickness ranges, values close to those of the assumed tissue are achieved and it is possible for a trainee to perform a procedure with a sensation that is similar to that of an actual procedure. In one embodiment of the present invention, the thickness of the simulated mucosal layer 2 is preferably less than the thickness of the simulated submucosal layer 3.

When used in the mucosal tissue model according to the present invention, as long as the objective thereof is not inhibited, it is possible to use, for example, colorants such as pigments and dyes, and additives such as perfumes, antioxidizing agents, and antibacterial agents. In order to be made to closely resemble an organ of a living body, it is preferable to color the mucosal tissue model of the present invention, with a colorant, in a color that closely resembles an organ of a living body.

The mucosal tissue model 1 for endoscopic procedure training according to the present embodiment may be produced by a normal molding method. For example, it is possible to produce the simulated submucosal layer 3 by setting the liquid injection part 5, produced in advance, in a cavity of a mold of a corresponding shape and then molding. Further, it is possible to produce a layer that includes the simulated blood vessel 6 by setting a tube which is to serve as the simulated blood vessel 6 in a cavity in a mold of a corresponding shape and then molding.

A molded body of a hydrous polyvinyl alcohol-based material may be formed, for example, by a method in which a molding composition containing a polyvinyl alcohol, a cross-linking agent (boric acid, etc.), water, and an ionic liquid, etc., is poured into a mold and then gelated, or a method in which the same molding composition is poured into a mold and then gelation is promoted by repeatedly freezing the molding composition by cooling to the melting point thereof or lower and melting the molding composition by heating to the melting point thereof or higher. A molded body of a hydrocarbon-based resin material may be formed, for example, by a molding method such as extruding, casting, vacuum molding, or injection molding including multiple colors.

The mucosal tissue model 1 for endoscopic procedure training is mounted on an arbitrary organ model, for example, a model of a throat organ (oral cavity, pharynx, larynx), an upper digestive organ (stomach, esophagus, duodenum), or a lower digestive organ (small intestine, large intestine), and used in endoscopic procedure training such as EMR or ESD, etc. An ulcer model may be embedded in a model mounting section provided to a digestive organ model or an ulcer model may be adhered to an inner wall of a digestive organ model. The model mounting section of the digestive organ model may be a frame or a recess formed by making a partial defect in a wall thereof, or a jig for mounting a model may be attached to an inner wall of the digestive organ model. The ulcer model may be adhered to an inner wall by using a bonding agent, an adhesive agent, double-sided tape, or the like.

An energy device may be used to implement the procedure training. Examples of energy devices include electric scalpels, ultrasonic scalpels, and high-frequency radio wave scalpels, etc.

FIG. 2-5 are schematic views showing a use of the mucosal tissue model 1 for endoscopic procedure training in ESD procedure training.

The mucosal tissue model 1 for endoscopic procedure training according to the first embodiment is adhered to an inner wall of a digestive organ model. In the mucosal tissue model 1 for endoscopic procedure training of the present embodiment, the liquid injection part 5 contains an absorbent polymer, and by injecting a liquid into the liquid injection part 5, the simulated mucosal layer 2 bulges in the direction opposite to the simulated submucosal layer 3 side in the same manner as a protuberance occurring due to a liquid being injected to an affected site which is performed in actual ESD (FIG. 2). By adjusting the thickness and hardness of the simulated mucosal layer 2 and the simulated submucosal layer 3, the shape of the protuberance when liquid is injected not only has characteristics close to the shape of a protuberance in a biological mucosa that is observed when ESD is actually performed, but a tactile sensation of softness close to that of a biological mucosa is also realized. In the present embodiment, the protuberance height upwards from the thickness direction of the mucosal tissue model 1 for endoscopic procedure training after liquid is injected is adjusted so as to be 10-20 mm.

Next, an electric scalpel is used to incise the simulated mucosal layer 2 so as to surround a pseudo lesion set on the simulated mucosal layer 2. In the mucosal tissue model 1 for endoscopic procedure training of the present embodiment, by using an electric scalpel to make an incision such that a specific location is surrounded, in the same manner as incisions in a mucosal layer in actual ESD, the simulated mucosal layer 2 partially contracts and the simulated submucosal layer 3 is exposed (FIG. 3).

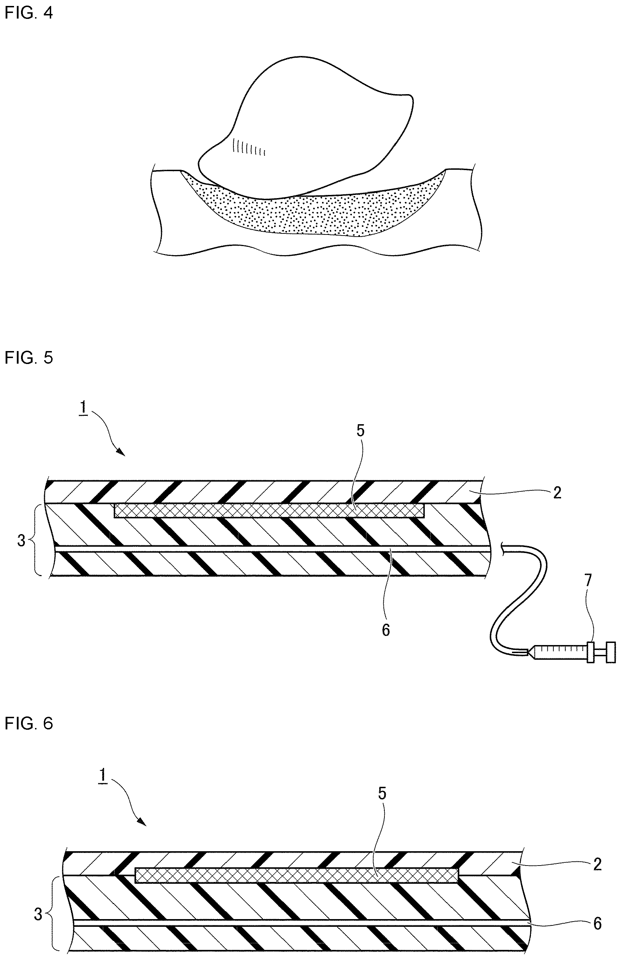

Then, an electric scalpel is used to incise the exposed simulated submucosal layer 3, and the simulated mucosal layer 2, including the pseudo lesion, and the simulated submucosal layer 3 are dissected (FIG. 4). In the mucosal tissue model 1 for endoscopic procedure training of the present embodiment, as shown in FIG. 5, a syringe 7 charged with simulated blood is connected to the simulated blood vessel 6. Therefore, if the simulated blood vessel 6 is damaged during dissection, in the same manner as hemorrhaging in actual ESD, the simulated blood flows from the inside of the simulated blood vessel 6 to the outside. In this case, it is possible for a trainee to perform training including hemostasis.

Examples of kinds of endoscopic hemostasis techniques include so-called mechanical methods such as those in which hemostatic forceps or clips are attached to an ulcer site that experienced hemorrhaging, and various kinds of thermal coagulation methods.

Examples of thermal coagulation methods include a heater probe method, a microwave method, a high frequency method, a laser irradiation method, and an argon plasma coagulation method. The ulcer model according to the present embodiment is particularly suitable for practicing hemostasis using a heater probe method, a microwave method, a high frequency method, or a laser irradiation method. In particular, an ulcer model having a model main body section which is a molded body of a hydrous polyvinyl alcohol-based material is suitable for practicing hemostasis using a thermal coagulation method. The reason therefor is because the thermal coagulation behavior of hydrous polyvinyl alcohol-based materials closely resembles the behavior of actual human body tissue.

In cases in which a thermal coagulation method is used as an endoscopic hemostasis technique, the material forming the simulated submucosal layer 3 is more preferably a hydrous polyvinyl alcohol-based material.

As shown in FIG. 6, in a modification of the present embodiment, the liquid injection part 5 is positioned in an interlayer between the simulated mucosal layer 2 and the simulated submucosal layer 3.

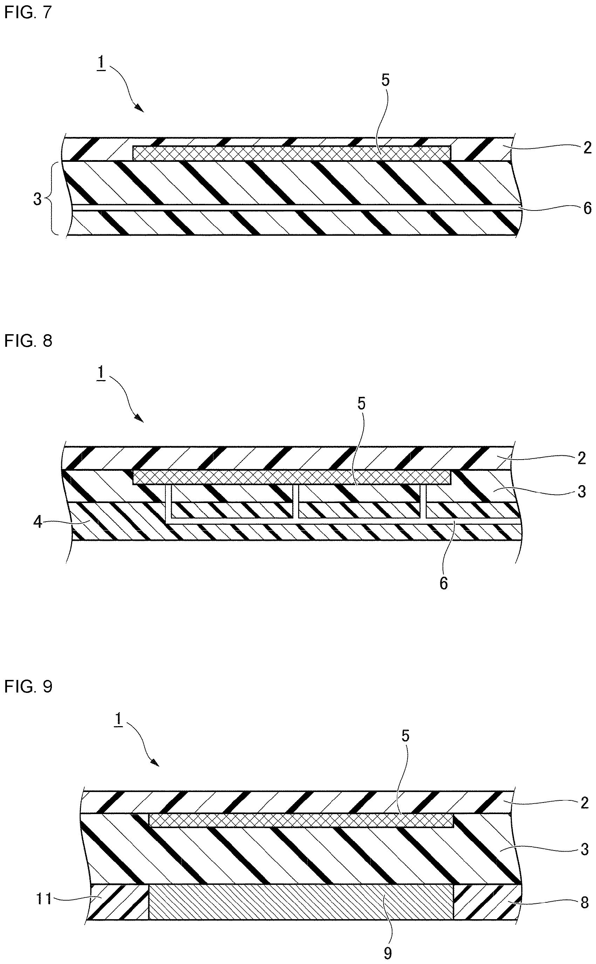

As shown in FIG. 7, in another modification, the liquid injection part 5 is positioned inside the simulated mucosal layer 2 such that the lower surface thereof is in contact with the simulated submucosal layer 3.

The cross-sectional shape of the liquid injection part 5 is not particularly limited as long as the expansion thereof when liquid is absorbed is not inhibited, and may, for example, be a trapezoid or a shape having an upward-oriented projection.

As shown in FIG. 8, in a further modification, a simulated muscle layer 4 is provided below the simulated submucosal layer 3, and the simulated blood vessel 6 comprises a tube which is embedded in the simulated muscle layer 4 and tubes which pass from the tube through the simulated submucosal layer 3, that is above the tube in the thickness direction, and reach as far as the liquid injection part 5 lowermost surface.

The simulated muscle layer 4 may be formed from the same or different materials as the simulated mucosal layer 2 or the simulated submucosal layer 3. The hardness of the simulated muscle layer 4 should be selected, as appropriate, in accordance with the type of mucosal tissue that is assumed. However, for example, the type E hardness of a molded body could be set to a range of 5-55. More specifically, the type E hardness of the simulated muscle layer 4 is preferably 15-45. In the same manner as for the simulated mucosal layer 2 and the simulated submucosal layer 3, as the resin for forming a layer having a type E hardness of the range described above, it is possible to use, for example, a hydrous polyvinyl alcohol-based material containing a polyvinyl alcohol and water, or a hydrocarbon-based resin material containing a lipophilic resin and an oil. The type E hardness of a molded body may be adjusted appropriately by, for example, adjusting the water content of the hydrous polyvinyl alcohol-based material, the amount of oil in the hydrocarbon-based resin material, and/or the amount of an ionic liquid.

In the present embodiment, a range of 1.0-5.0 mm, and in particular 2.0-3.0 mm, is preferable for the thickness of the simulated submucosal layer 3, and a range of 1.0-5.0 mm, and in particular 2.0-3.0 mm is preferable for the thickness of the simulated muscle layer 4. By setting to these thickness ranges, values close to those of the assumed tissue are achieved and it is possible for a trainee to perform a procedure with a sensation that is similar to an actual procedure. In one embodiment of the present invention, the thickness of the simulated mucosal layer 2 is preferably less than the total thickness of the simulated submucosal layer 3 and the simulated muscle layer 4.

In another embodiment, the simulated blood vessel 6 may be a hole that passes through the simulated submucosal layer 3 and/or the simulated muscle layer 4, and may be combined with a tube. When the simulated blood vessel is not a tube but a hole formed in the simulated submucosal layer 3 and/or the simulated muscle layer 4, actual techniques are reproduced well and it is possible to practice hemostasis techniques which use a mechanical method or a thermal coagulation method.

Meanwhile, when the simulated blood vessel 6 is a tube, an end section of the tube may protrude to the outer side of the simulated submucosal layer 3 or the simulated muscle layer 4. As shown in FIG. 5, an end section of the tube may be connected to a syringe 7 charged with simulated blood, and in that case, the simulated blood is supplied from the syringe 7 to the simulated blood vessel 6. Instead of a syringe, it is possible to use any device, instrument, or equipment that can cause the simulated blood to flow, such as a tubular pump.

**Second Embodiment**

FIG. 9 shows a mucosal tissue model 1 for endoscopic procedure training according to a second embodiment of the present invention. In the present embodiment, the mucosal tissue model 1 for endoscopic procedure training comprises a simulated mucosal layer 2, a simulated submucosal layer 3, a liquid injection part 5, and a pseudo abdominal cavity layer 8. In drawings from FIG. 9 onwards, the same reference signs are used for elements which are the same as those in the first embodiment described above and explanations thereof are omitted. The following explanation describes only parts which differ from the first embodiment described above.

The pseudo abdominal cavity layer 8 is a layer which is formed from a resin and is joined at the upper surface thereof to the lower surface of the simulated submucosal layer 3. In the present embodiment, the pseudo abdominal cavity layer 8 is a layer including a tabular structure body 9 formed from a soft material or a sponge-type material.

The pseudo abdominal cavity layer 8 may be formed from the same or different materials as the simulated mucosal layer 2 and the simulated submucosal layer 3, and the hardness thereof should be selected, as appropriate, in accordance with the type of mucosal tissue that is assumed. More specifically, it is thought that the type E hardness of a molded body of the pseudo abdominal cavity layer 8 is to be set to a range of 5-55, and more preferably 15-45.

Examples of the soft material include silicones, polyolefins, polyurethanes, polyvinyl chlorides, polyacrylates, hydrogels, and ionogels, etc. The type E hardness of the tabular structure body 9 formed from the soft material is preferably 0-20 and more preferably 5-15.

Examples of the sponge-type material include ethylene-vinyl acetate copolymers, polyurethanes, polyolefins, EPDM (ethylene propylene diene rubber), and polystyrenes, etc. The type E hardness of the tabular structure body 9 formed from the sponge-like material is preferably 5-20 and more preferably 5-15.

Comparing within the same mucosal tissue model, by setting the type E hardness of the structure body 9 so as to be a lower value than the type E hardness of the simulated submucosal layer 3, a change in dissection sensation occurs in the case in which an electric scalpel penetrates the simulated submucosal layer 3 during a dissection. Further, the structure body 9 may be colored a different color from the simulated submucosal layer 3. Due thereto, it is possible to make visual confirmation below an endoscope when the electric scalpel penetrates the simulated submucosal layer 3 during a dissection.

In the same manner as the first embodiment, the mucosal tissue model for endoscopic procedure training of the present embodiment is used for procedure training such as EMR and ESD, etc. In the present embodiment, since the mucosal tissue model 1 for endoscopic procedure training has a pseudo abdominal cavity layer 8, even in the case of being used with an ulcer model being adhered to an inner wall of a digestive organ model, if an electric scalpel penetrates the simulated submucosal layer 3 during dissection, the hardness of the material which is an object for dissection decreases, and therefore, it is possible to reproduce the same visual sensation as when an electric scalpel penetrates as far as the abdominal cavity and a perforation is created in actual ESD. Further, it is possible to close a perforated site by suturing using clips, or the like.

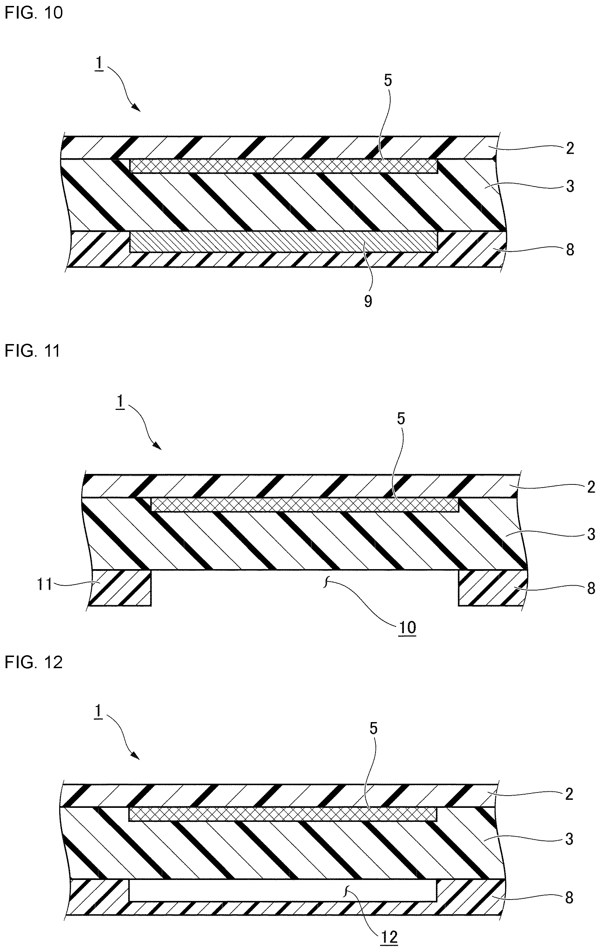

As shown in FIG. 10, in another modification, the pseudo abdominal cavity layer 8 is a resin layer which is formed at the lower surface side of the simulated submucosal layer 3 and is provided, at an upper surface of the layer, with a tabular structure body 9 formed from a sponge-type material at a position below the liquid injection part 5.

As shown in FIG. 11, in a modification of the present embodiment, the pseudo abdominal cavity layer 8 is a layer which is formed at the lower surface side of the simulated submucosal layer 3 and is configured to comprise, at a region including that below the liquid injection part 5, a space 10 having no resin and in the periphery thereof, a peripheral resin part 11 comprising a resin.

As shown in FIG. 12, in another modified example, the pseudo abdominal cavity layer 8 is a resin layer which is formed at the lower surface side of the simulated submucosal layer 3 and is provided with a space 12 forming a recess at a position below the liquid injection part 5.

In another embodiment, the simulated muscle layer 4 is provided below the simulated submucosal layer 3, and the pseudo abdominal cavity layer 8 is provided to the lower surface of the simulated muscle layer 4.

**Third Embodiment**

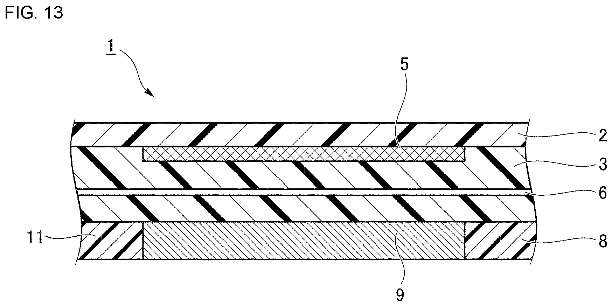

FIG. 13 shows a mucosal tissue model 1 for endoscopic procedure training according to a third embodiment of the present invention. In the present embodiment, the mucosal tissue model 1 for endoscopic procedure training comprises a simulated mucosal layer 2, a simulated submucosal layer 3, a simulated muscle layer 4, a liquid injection part 5, a simulated blood vessel 6, and a pseudo abdominal cavity layer 8. In FIG. 13, the same reference signs are used for elements which are the same as those in the first and second embodiments described above and explanations thereof are omitted.

In the same manner as the first embodiment, the mucosal tissue model for endoscopic procedure training of the present embodiment is used for procedure training such as EMR and ESD, etc. In the mucosal tissue model 1 for endoscopic procedure training of the present embodiment, a syringe 7 charged with simulated blood is connected to the simulated blood vessel 6. Therefore, if the simulated blood vessel 6 is damaged during dissection, in the same manner as hemorrhaging in actual ESD, the simulated blood flows from the inside of the simulated blood vessel 6 to the outside. In this case, it is possible for a trainee to perform training including hemostasis. Further, since the mucosal tissue model 1 for endoscopic procedure training has a pseudo abdominal cavity layer 8, even in the case of being used with an ulcer model being adhered to an inner wall of a digestive organ model, if an electric scalpel penetrates the simulated muscle layer 4 during a dissection, the hardness of the material which is an object for dissection decreases, and therefore, it is possible to reproduce the same visual sensation as when an electric scalpel penetrates as far as the abdominal cavity and a perforation is created in actual ESD. Further, it is possible to close a perforated site by suturing using clips, or the like.

**EXAMPLES**

Hereinafter, an embodiment of the present invention shall be described in detail. The present invention is not limited to the following embodiment and can be implemented with changes added, as appropriate, as long as the effects of the invention are not inhibited.

The raw materials and production method used in the examples, etc. are as follows.

(1) Simulated mucosal layer

(A) Hydrogenated styrene-based thermoplastic elastomer

• SEEPS (SEPTON 4055, manufactured by Kuraray Co., Ltd.) (MFR (temperature 230°C, load 2.16 kg) below the detection limit, styrene content 30 mass%, hydrogenation rate 90 mol% or more)

(B) Oil

• Paraffin oil (Diana Process Oil PW90, manufactured by Idemitsu Kosan Co., Ltd.)

(C) Copolymer of hydrophobic polymer and hydrophilic polymer

• Polyolefin/polyether copolymer (PELECTRON PVL, manufactured by Sanyo Chemical Industries, Ltd.) (MFR (measured at 190°C and a load of 2.16 kg) 8-15 g/10 min)

(D) Ionic liquid

• CIL-312 (manufactured by Japan Carlit Co., Ltd.)

(Production Method)

To 100 parts by mass of a hydrogenated styrene-based thermoplastic elastomer, 300 parts by mass of oil was added dropwise and allowed to sufficiently impregnate the elastomer. After several days, using a Brabender Plasti-Corder (PL2000, manufactured by Brabender GmbH), a copolymer of an hydrophobic polymer and a hydrophilic polymer, and an ionic liquid were introduced, and then kneading was performed for six minutes at 180°C and a rotation speed of 50 revolutions/min. to obtain a resin composition for a simulated mucosal layer.

(2) Simulated submucosal layer

A resin composition for a simulated submucosal layer was obtained in the same manner as the (1) simulated mucosal layer except that 400 parts by mass of the oil was added dropwise.

(3) Liquid injection part

An absorbent polymer (Aqualic® CA, manufactured by Nippon Shokubai Co., Ltd.) was used.

(4) Simulated blood vessel

A tube (manufactured by ACCESS Technologies) made of a thermoplastic polyurethane and having an outer diameter of ø0.9 mm and an inner diameter of ø0.5 mm was used.

(5) Simulated blood

Pseudo blood obtained by dispersing 0.5 wt% of powdered food coloring yellow No. 5 in physiological saline was used.

(6) Pseudo abdominal cavity layer

A resin composition for a pseudo abdominal cavity layer was obtained in the same manner as the (1) simulated mucosal layer except that 200 parts by mass of the oil was added dropwise.

(7) Tabular structure formed from sponge-type material

A thermoplastic urethane sponge (Newpelca, manufactured by Sanwa Kako Co., Ltd.) with a thickness of 1 mm was used.

(Production of mucosal tissue model)

Example 1

First, the simulated submucosal layer 3 was charged in a mold having the simulated blood vessel 6 set therein and molded at 160°C. Next, the liquid injection part 5 was charged in a recessed section of the simulated submucosal layer 3 and stuck together integrally with the preliminarily molded simulated mucosal layer 2 which was adhered thereon. An adhesive agent specifically for the resins used was employed for the adhesion. Next, the syringe 7 was connected to an end section of the simulated blood vessel 6. Furthermore, the pseudo abdominal cavity layer 8 and the tabular structure body 9 formed from a sponge-type material were adhered to the simulated submucosal layer 3 lower section and stuck together integrally to obtain a mucosal tissue model.

**Example 2**

First, the simulated submucosal layer 3 was charged in a mold having the simulated blood vessel 6 set therein and molded at 160°C. Next, the liquid injection part 5 was charged in a recessed section of the simulated submucosal layer 3 and stuck together integrally with the preliminarily molded simulated mucosal layer 2 which was adhered thereon. An adhesive agent specifically for the resins used was employed for the adhesion. Next, the syringe 7 was connected to an end section of the simulated blood vessel 6. Furthermore, the pseudo abdominal cavity layer 8, the center thereof having been configured as a hollow structure, was adhered to the simulated submucosal layer 3 lower section and stuck together integrally therewith to obtain a mucosal tissue model.

**Comparative Example 1**

A mucosal tissue model was obtained in the same manner as in Example 1 except that the simulated blood vessel 6 was not installed.

**Comparative Example 2**

A mucosal tissue model was obtained in the same manner as in Example 1 except that the pseudo abdominal cavity layer 8 and the tabular structure body 9 formed from a sponge-type material were not adhered.
The evaluation methods for the various characteristics of the mucosal tissue models prepared in the examples etc. are as follows.

(1) Evaluation of reproducibility of mucosal layer bulge

A drug solution (physiological saline: 10 mL) was injected into the liquid injection part and the bulge in the simulated mucosal layer was evaluated. Cases in which a bulge of a mucosal layer was reproduced are shown by ∘ and cases in which a bulge was not reproduced or there was no swelling at all are shown by x.

(2) Evaluation of reproducibility of hemorrhaging

The degree of outflow of simulated blood when an electric scalpel (high frequency surgical device: VIO 100C, manufactured by Erbe; conditions: bipolar, coagulation mode, 40 W) was pressed against the simulated blood vessel was evaluated visually. Cases in which outflow of blood from a blood vessel was reproduced are shown by ∘ and cases in which outflow was not reproduced are shown by x.

(3) Evaluation of reproducibility of hemostasis operationability

A hemostasis operation was performed using an electric scalpel (conditions: bipolar, coagulation mode, 40 W) on a simulated blood vessel from which simulated blood was flowing, and the degree of outflow of simulated blood in the hemostasis operation was evaluated visually. Cases in which hemostasis by a hemostasis operation was reproduced are shown by ∘ and cases in hemostasis was not reproduced are shown by x.

(4) Evaluation of reproducibility of tactile sensation of incision/dissection

The degree of incision (whether incision in response to the electric scalpel was possible) of each layer and the reproducibility of a dissection sensation at a layer interface when each layer was pressed with an electric scalpel (conditions: monopolar, incision mode, 40 W) were evaluated. Cases in which it was possible to reproduce a sensation close to actual incisions or dissections are shown by ∘ and cases in which the sensation was insufficiently reproduced and cases in which a dissection sensation was not obtained are shown by x.

(5) Evaluation of reproducibility of tactile sensation of perforation

Reproducibility of a tactile sensation when a perforation occurs during a dissection was evaluated. Cases in which a tactile sensation of a perforation could be reproduced are shown by ∘ and cases in which a tactile sensation of a perforation was not reproduced are shown by x.

The results obtained by evaluating the mucosal tissue models of the examples and comparative examples are shown below.

**Table 1**

|  | Example 1 | Example 2 | Comparative Example 1 | Comparative Example 2 |
|---|---|---|---|---|
| Reproducibility of mucosal layer bulge | ○ | ○ | ○ | ○ |
| Hemorrhage reproducibility | ○ | ○ | × | ○ |
| Reproducibility of hemostasis operation | ○ | ○ | × | ○ |
| Reproducibility of incision/dissection | ○ | ○ | ○ | ○ |
| Reproducibility of perforation sense of touch | ○ | ○ | ○ | × |

As shown in Table 1, the mucosal tissue models of Examples 1 and 2 satisfied all of the evaluation criteria whereas in the mucosal tissue models of Comparative Examples 1 and 2, sufficient reproducibility was not obtained for some evaluation criteria. In particular, in the mucosal tissue model of Comparative Example 1, outflow of simulated blood from the simulated blood vessel did not occur, and therefore, a sensation of performing actual incisions or dissections was not sufficiently reproduced. Further, in the mucosal tissue model of Comparative Example 2, the case in which the electric scalpel penetrated the mucosal tissue model and came into contact with the inner wall of the digestive organ model during a dissection did not reproduce the sensation when a perforation actually occurs.

**REFERENCE SIGNS LIST**

1 Mucosal tissue model for endoscopic procedure training

2 Simulated mucosal layer

3 Simulated submucosal layer

4 Simulated muscle layer

5 Liquid injection part

6 Simulated blood vessel

7 Syringe

8 Pseudo abdominal cavity layer

9     Tabular structure body formed from sponge-type material

10    Space

11    Peripheral resin part

12    Space

## Claims

1. A mucosal tissue model for endoscopic procedure training comprising, in order, a simulated mucosal layer and a simulated submucosal layer, wherein the mucosal tissue model has a liquid injection part provided inside either one of the simulated mucosal layer and the simulated submucosal layer, or disposed between the layers, and further has a simulated blood vessel inside a layer that is positioned below the simulated mucosal layer.

2. The mucosal tissue model according to claim 1, wherein a simulated muscle layer is provided below the simulated submucosal layer and a simulated blood vessel is provided inside the simulated muscle layer.

3. The mucosal tissue model according to claim 1 or 2, wherein the simulated blood vessel contains simulated blood at a pressure equal to or greater than atmospheric pressure.

4. The mucosal tissue model according to any one of claims 1 to 3, wherein the simulated blood vessel is connected to a device that can supply simulated blood to the inside of the simulated blood vessel.

5. A mucosal tissue model for endoscopic procedure training comprising, in order, a simulated mucosal layer and a simulated submucosal layer, wherein the mucosal tissue model has a liquid injection part provided inside either one of the simulated mucosal layer and the simulated submucosal layer, or disposed between the layers, and further has a pseudo abdominal cavity layer below the simulated submucosal layer.

6. The mucosal tissue model according to claim 5, wherein the pseudo abdominal cavity layer comprises a structure body formed from a material having a lower hardness than that of the simulated submucosal layer, or comprises a space.

7. The mucosal tissue model according to claim 6, wherein the material having a lower hardness than that of the simulated submucosal layer is a sponge-type material.

8. The mucosal tissue model according to any one of claims 1 to 7, wherein the mucosal tissue model is capable of being incised and/or dissected by an energy device.

9. The mucosal tissue model according to any one of claims 1 to 8, wherein the liquid injection part comprises a material that expands upon absorbing a liquid, the material being an absorbent polymer or a sponge-type soft resin.

10. The mucosal tissue model according to any one of claims 1 to 9, wherein each layer has a type E hardness within a range of 5 to 55.

11. The mucosal tissue model according to any one of claims 1 to 10, wherein at least one layer comprises a hydrous polyvinyl alcohol-based resin.

12. The mucosal tissue model according to any one of claims 1 to 10, wherein at least one layer comprises a hydrocarbon resin-based resin.

13. The mucosal tissue model according to any one of claims 1 to 12, wherein the mucosal tissue model is a model of an esophagus, a stomach, a duodenum, a small intestine, a large intestine, an oral cavity, a pharynx, or a larynx.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

<div align="center"><b>INTERNATIONAL SEARCH REPORT</b></div>

| | International application No. |
|---|---|
| | PCT/JP2020/047810 |

**A. CLASSIFICATION OF SUBJECT MATTER**
G09B 9/00(2006.01)i; G09B 23/28(2006.01)i
FI: G09B23/28; G09B9/00 Z

According to International Patent Classification (IPC) or to both national classification and IPC

**B. FIELDS SEARCHED**

Minimum documentation searched (classification system followed by classification symbols)
G09B1/00-9/56, 17/00-19/26, 23/00-29/14

Documentation searched other than minimum documentation to the extent that such documents are included in the fields searched
| | |
|---|---|
| Published examined utility model applications of Japan | 1922-1996 |
| Published unexamined utility model applications of Japan | 1971-2021 |
| Registered utility model specifications of Japan | 1996-2021 |
| Published registered utility model applications of Japan | 1994-2021 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| Y | JP 6055069 B1 (SAN AROO KK) 27 December 2016 (2016-12-27) paragraphs [0010], [0020]-[0028], [0033]-[0036], [0052]-[0054], [0057]-[0060], [0063], fig. 1, 5 | 1-4, 8-13 |
| Y | JP 3184695 U (KOKEN CO., LTD.) 11 July 2013 (2013-07-11) paragraphs [0010]-[0017], fig. 1 | 1-4, 8-13 |
| Y | WO 2019/004374 A1 (DENKA COMPANY LIMITED) 03 January 2019 (2019-01-03) paragraph [0049], fig. 15-16 | 4, 8-13 |
| A | WO 2019/126369 A1 (APPLIED MEDICAL RESOURCES CORPORATION) 27 June 2019 (2019-06-27) paragraphs [0040], [0042], [0051], fig. 4 | 5-7 |

☐ Further documents are listed in the continuation of Box C.  ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 08 March 2021 (08.03.2021) | 16 March 2021 (16.03.2021) |

| Name and mailing address of the ISA/ | Authorized officer |
|---|---|
| Japan Patent Office | |
| 3-4-3, Kasumigaseki, Chiyoda-ku, | |
| Tokyo 100-8915, Japan | Telephone No. |

Form PCT/ISA/210 (second sheet) (January 2015)

| International application No. |
| --- |
| PCT/JP2020/047810 |

| Patent Documents referred in the Report | Publication Date | Patent Family | Publication Date |
| --- | --- | --- | --- |
| JP 6055069 B1 | 27 Dec. 2016 | US 2018/0357930 A1 paragraphs [0010], [0038]-[0049], [0054]-[0058], [0077]-[0080], [0083]-[0086], [0090], fig. 1, 5 WO 2017/099023 A1 | |
| JP 3184695 U | 11 Jul. 2013 | (Family: none) | |
| WO 2019/004374 A1 | 03 Jan. 2019 | US 2020/0160751 A1 paragraph [0068], fig. 15-16 EP 3648083 A1 CN 110869996 A | |
| WO 2019/126369 A1 | 27 Jun. 2019 | US 2019/0189032 A1 paragraphs [0040], [0042], [0051], fig. 4 AU 2018388635 A | |

Form PCT/ISA/210 (patent family annex) (January 2015)

**EP 4 083 969 A1**

**Patent documents cited in the description**

- JP 2006116206 A
- JP 2008197483 A
- JP 2018017769 A
- JP 2017107094 A
- JP 2016038563 A
- JP 2011076035 A
- JP 2010277003 A
- JP 2010197637 A
- JP 2010204131 A
- JP 2011075907 A
- JP 2011008213 A
- JP 2010156894 A